# EUROPEAN PATENT APPLICATION

(11) **EP 2 388 718 A1**
(43) Date of publication of application: **23.11.2011**
(21) Application number: 11161984.7
(22) Date of filing: 12.04.2011
(51) Int. Cl.: G06F 17/30, G06F 3/048

(54) **Display apparatus displaying web page and displaying method of the same**

(30) Priority: 19.05.2010 KR 20100046951; 23.06.2010 US 821649; 06.10.2010 KR 20100097178
(71) Applicant: SAMSUNG ELECTRONICS CO., LTD., Suwon-si Gyeonggi-do 442-742 (KR)
(72) Inventor: Kim, Byuk-sun, Seoul (KR); Kim, Yong-deok, Uiwang-si (KR); Lee, Hye-jeong, Seoul (KR); Lee, Bo-ra, Seoul (KR)
(74) Representative: Robinson, Ian Michael

(57) **Abstract**

Disclosed are a display apparatus displaying a web page and a displaying method of the same, the display apparatus including: an input unit which receives web page information; an image processor which processes a web page to display the web page; a display unit which displays thereon the processed web page; a command receiver which receives a user's command; and a controller which controls the image processor to divide the web page into at least one block, and to display the web page in blocks on the display unit according to a user's command input through the command receiver. Accordingly, a web page can be displayed in blocks that are not cut or hidden.

## Description

### BACKGROUND

### 1. Field

Apparatuses and methods consistent with the exemplary embodiments relate to a display apparatus displaying a web page and a displaying method of the same, and more particularly, to a display apparatus and a display method of the same which divides and displays a web page.

### 2. Description of the Related Art

A user may typically use a pointing device (e.g., a mouse) to perform various functions relating to a web page such as selecting one of items and links of web pages and searching parts of a web page. However, a user who searches a web page displayed on a TV uses only a remote controller to control an operation of a web page instead of using the pointing device.

If the remote control lacks a pointing function (e.g., like a mouse) or a displayed web page includes a plurality of elements, a user may not search different parts/elements of the web page promptly and/or efficiently. In that case, an additional function is needed.

### SUMMARY

Accordingly, one or more exemplary embodiments provide a display apparatus and a web page displaying method of the same which easily searches a web page.

Another exemplary embodiment provides a display apparatus and a web page displaying method of the same which displays a web page in blocks that are not cut or hidden.

Still another exemplary embodiment provides a display apparatus and a web page displaying method of the same which changes a display location of a block depending on a size of the block.

According to the present invention there is provided an apparatus and method as set forth in the appended claims. Other features of the invention will be apparent from the dependent claims, and the description which follows.

The foregoing and/or other aspects may be achieved by providing a display apparatus including: an input unit which receives web page information; an image processor which processes a web page to display the web page; a display unit which displays thereon the processed web page; a command receiver which receives a user's command; and a controller which controls the image processor to divide the web page into at least one block, and to display the web page in blocks on the display unit according to a user's command input through the command receiver.

The image processor may process the web page to display a focused block in a central area of the display unit.

The image processor may process the web page to display a focused block in its entirety on the display unit.

The image processor may process the web page to move the blocks according to a scroll signal and to display the focused block in a central area of the display unit after the movement is completed upon receiving the scroll signal through the command receiver to scroll the web page.

The image processor may process the web page to move the blocks according to a scroll signal and to display the entire focused block on the display unit after the movement is completed when the scroll signal is received through the command receiver to scroll the web page.

The image processor may process the web page to display the focused block in a central area of the display unit if the focused block according to a user's command is a predetermined reference size or larger.

The image processor may process the web page to move the block according to a scroll signal and display a focused block in a central area of the display unit after the movement is completed if the focused block is a predetermined reference size or larger, upon receiving a scroll signal through the command receiver to scroll the web page.

The image processor may display the focused block in a fringe of the display unit and display a predetermined dummy UI in at least one circumference of the focused block.

The image processor may move the block according to a scroll signal, display a focused block in a fringe of the display unit and display a predetermined dummy UI in at least one circumference of the focused block after the movement is completed when the scroll signal is received through the command receiver to scroll the web page.

The image processor may display a graphic user interface (GUI) to distinguish the focused block from other blocks.

The foregoing and/or other aspects may be achieved by providing a web page displaying method of a display apparatus which includes a display unit, the method including: receiving web page information; dividing a web page into at least one block and displaying the divided block; receiving a user's command; and displaying the web page in blocks on the display unit according to the user's command.

The displaying the web page in blocks may include displaying a focused block in a central area of the display unit.

The displaying the web page in blocks may include displaying a focused block in its entirety on the display unit.

The receiving the user's command may include receiving a scroll signal to scroll the web page, and the displaying the web page in blocks may include moving the block according to the scroll signal and displaying a focused block in a central area of the display unit after the movement is completed.

The receiving the user's command may include receiving a scroll signal to scroll the web page, and the displaying the web page in blocks may include moving the block according to the scroll signal and displaying a focused block in its entirety on the display unit after the movement is completed.

The displaying the web page in blocks may include determining whether a focused block according to the user's command is a predetermined reference size or larger, and displaying the focused block in a central area of the display unit if the focused block is the predetermined reference size or larger.

The receiving the user's command may include receiving a scroll signal to scroll the web page, and the displaying the web page in blocks may include moving the block according to the scroll signal; determining whether a focused block is a predetermined reference size of larger after the movement is completed; and displaying the focused block in a central area of the display unit if it is determined that the focused block is the predetermined reference size or larger.

The displaying the web page in blocks may include displaying a focused block in a fringe of the display unit; and displaying a predetermined dummy user interface (UI) in at least one circumference of the focused block.

The receiving the user's command may include receiving a scroll signal to scroll the web page, and the displaying the web page in blocks may include moving the block according to the scroll signal; displaying a focused block in a fringe of the display unit after the movement is completed; and displaying a predetermined dummy UI in at least one circumference of the focused block.

The method may further include displaying a GUI to distinguish a focused block from other blocks.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 is a control block diagram of a display apparatus according to an exemplary embodiment;
FIG. 2 illustrates a web page which includes a plurality of blocks;
FIG. 3 illustrates a web page which is divided into a plurality of blocks displayed in the display apparatus according to an exemplary embodiment;
FIG. 4 illustrates a web page which is displayed in the display apparatus according to an exemplary embodiment;
FIG. 5 illustrates another web page which is displayed in the display apparatus according to an exemplary embodiment;
FIG. 6 illustrates a web page which is displayed when a scroll operation is performed in the display apparatus according to an exemplary embodiment;
FIG. 7 illustrates another web page which is displayed when a scroll operation is performed in the display apparatus according to an exemplary embodiment; and
FIG. 8 is a control flowchart of a web page displaying method of the display apparatus according to an exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

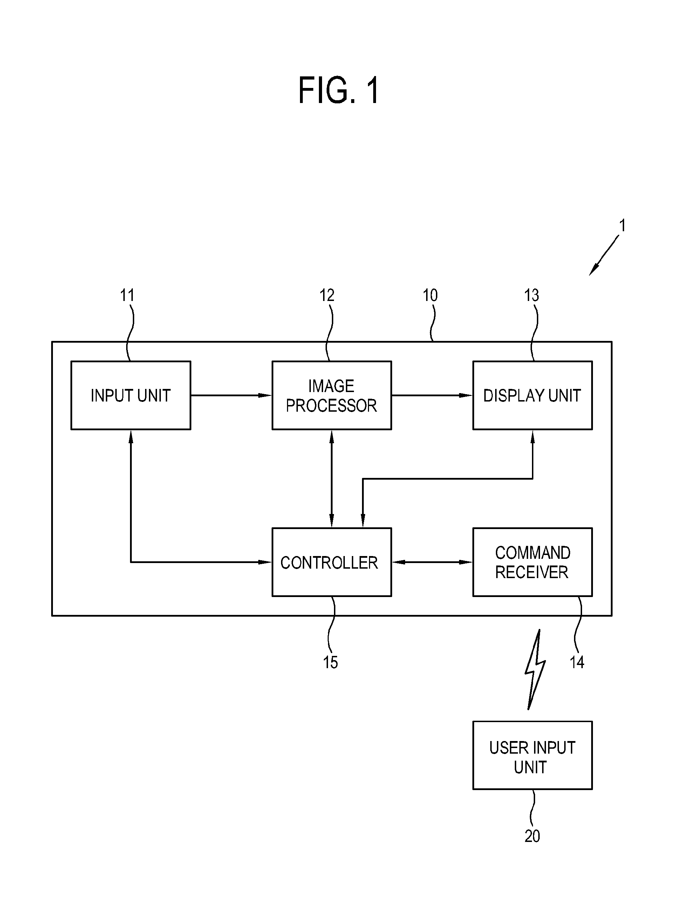

FIG. 1 is a control block diagram of a display apparatus according to an exemplary embodiment.

As shown therein, a display apparatus 1 includes a display main body 10 to display an image thereon, and a user input unit 20 to control the display main body 10 by a user's manipulation. The display apparatus 1 according to the exemplary embodiment includes a television which receives and browses web information through a network such as the Internet, a computer system including a display unit such as a monitor or a screen, and a personal portable terminal which provides a web browsing function, such as a netbook, an e-book and a smart phone.

The display main body 10 includes an input unit 11, an image processor 12, a display unit 13, a command receiver 14 and a controller 15.

The user input unit 20 transmits to the display main body 10 a remote control signal according to a user's manipulation. The display main body 10 receives a remote control signal from the user input unit 20 and performs a corresponding operation. The user input unit 20 may include a direction key, a numeric key, a selection key or the like. The user input unit 20 may further include a wheel input unit or a touch pad. The user input unit 20 may further include a signal transmitter to transmit a remote control signal corresponding to a detected user's input, and a controller to control the foregoing elements.

The input unit 11 may receive web page information from the Internet. The input unit 11 may perform a communication operation through a network to receive web page information. The communication operation performed by the input unit 11 includes wired communication and wireless communication. The input unit 11 may further receive an image signal including an image content. The image signal may include an audio content and/or a data content as well as the image content. The image signal received by the input unit 11 may be, for example, a broadcasting signal transmitted by a broadcasting station or a signal input by a predetermined image device. In the case of the broadcasting signal, the input unit 11 may selectively receive a broadcasting signal from one of a plurality of channels. The broadcasting signal may be an air wave broadcasting signal, a cable broadcasting signal, a satellite broadcasting signal or another known broadcasting signal. The type of the broadcasting signal includes digital broadcasting and analog broadcasting. The input unit 11 may process a received broadcasting signal to obtain an image content therefrom. Such signal processing may include, without limitation, tuning, analog-digital conversion, demodulation, and digital-analog conversion.

In the case of an image signal input by an image device, the input unit 11 may communicate with the image device transmitting the image signal corresponding to the property of the input image signal. Such communication includes wired communication and wireless communication, and analog communication and digital communication. The type of communication includes all types of communication which is known to be used for transmitting an image content. The type of the image device supplying the image signal to the input unit 11 includes a DVD player, a blue-ray (BD) player, a PC, a mobile phone, a smart phone and other TVs but is not limited thereto. The input unit 11 may process the input image signal to obtain an image content therefrom. Such image processing may include, without limitation, analog-digital conversion and digital-analog conversion.

Further, the input unit 11 may receive an image signal from a predetermined server through a network, or receive an image signal from a portable storage medium such as a universal serial bus (USB) device. In each case, the input unit 11 may perform a given communication with a counterpart device to receive an image signal. The input unit 11 may receive and process the image signal under control of the controller 15.

The image processor 12 processes web page information (hereinafter, to be also called "web page") received by the input unit 11 and image contents obtained from an image signal. The image processor 12 may include a browser to browse web pages. The image processing performed by the image processor 12 may include demultiplexing, decoding, scaling, picture quality adjustment and picture quality improvement. The image processor 12 may process an image on a user interface (UI) menu for a user interface. The image processor 12 may overlap an image obtained from an image content and at least a part of a UI menu in a single screen or arrange the foregoing side by side.

The display unit 13 displays the web page and the image processed by the image processor 12. The display method of the web page and the image by the display unit 13 is not limited, and includes all of known display methods. The display method may be provided by using liquid crystal display (LCD), organic light emitting diode (OLED), plasma display panel (PDP), projection, cathode ray tube (CRT), or the like.

The command receiver 14 receives a remote control signal from the user input unit 20. The method of receiving the remote control signal by the command receiver 14 includes infrared, Bluetooth, Wi-Fi, or the like type.

The controller 15 controls the image processor 12 to divide a web page into at least one block and display the web page in blocks on the display unit 13 according to a user's command input through the command receiver 14. The controller 15 controls overall operations of the display main body 10 by controlling each element of the display main body 10 according to user's input information obtained from a remote control signal received through the user input unit 20, and by controlling the input unit 11 to receive a desired web page and/or image signal. The controller 15 may include a storage unit (not shown) to store therein data required for the foregoing control operation.

The controller 15 may include a non-volatile memory, e.g., an electrically erasable programmable read-only memory (EEPROM), a flash memory, and a hard disk drive (HDD) to store therein an execution code of a computer program corresponding to the control operation, a volatile memory to load at least a part of the execution code stored in the non-volatile memory, and a microprocessor to execute the execution code loaded to the volatile memory.

The display main body 10 may further include other elements for the operation of the display apparatus 1. For example, the display main body 10 may include an audio signal receiver, an audio signal processor and an audio output unit to receive, process and output an audio signal, an input pad unit provided in the display main body 10, separately from the user input 20, to receive a user's input, and a power supply unit to supply power for operations of the display main body 10.

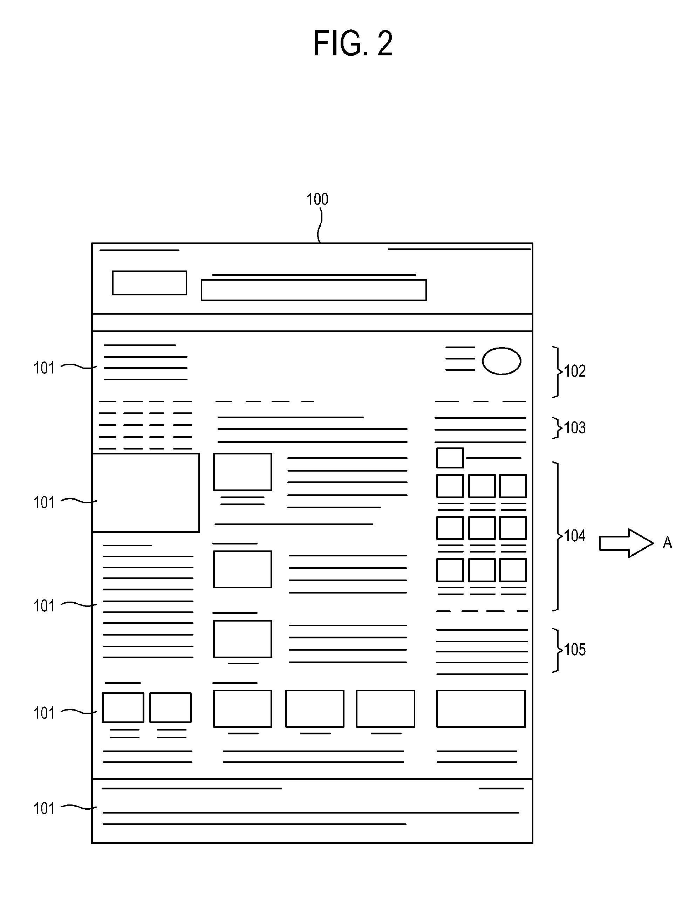

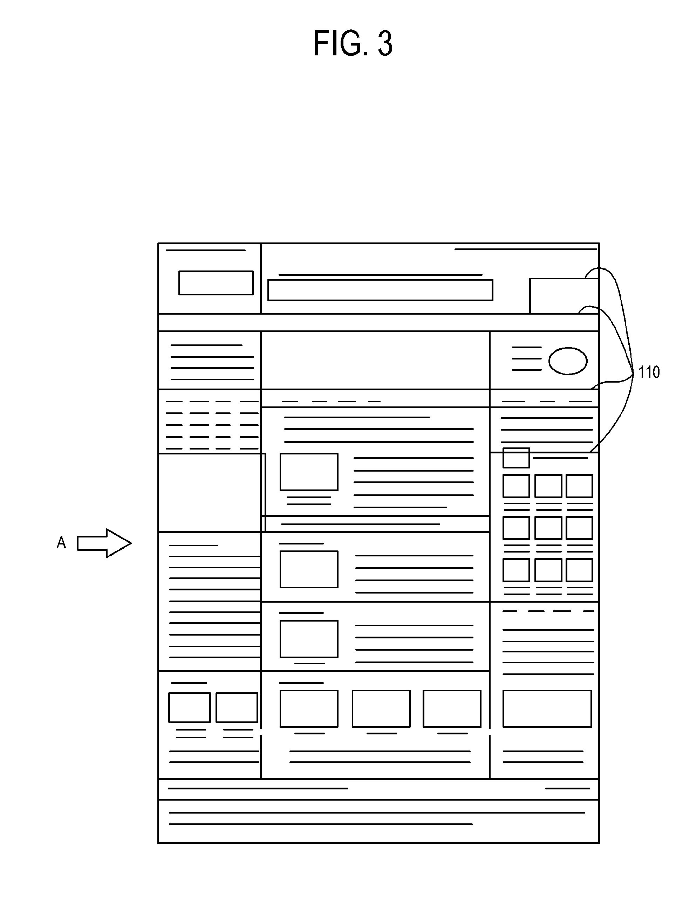

The display apparatus 1 in FIG. 1 divides a web page into a plurality of blocks and displays such divided web page in blocks. FIG. 2 illustrates a web page 100 including a plurality of blocks 101. FIG. 3 illustrates a web page that is divided into a plurality of blocks 101 to 105 displayed in the display apparatus 1 according to an exemplary embodiment. As shown in FIG. 2, each of the plurality of blocks of the web page 100 refers to a unit area into which the web page 100 is divided according to visual, geometric, semantic, and logical standards. Lines, boxes and a circle of the plurality of blocks 101 to 105 simplify texts, images, and diagrams of the plurality of blocks 101 to 105 for convenience.

As shown in FIG. 3, the display apparatus 1 may display a boundary 110 between the plurality of blocks 101 to 105 so that a user may recognize the web page 100 divided into the plurality of blocks 101 to 105. The display apparatus 1 may display one of the plurality of blocks 101 to 105 by focusing it on the display unit 13. That is, the display apparatus 1 may display the plurality of blocks 101 to 105, one of which is located in a substantially central area of a screen of the display unit 13. The web page 100 may be enlarged at an appropriate ratio for a user to recognize a content of the web page 100. One of the plurality of blocks 101 to 105 which is focused may be highlighted and displayed. The display apparatus 1 moves the focus to the plurality of blocks 101 to 105 up and down and to the left and right sides by a user's manipulation to thereby browse the web page 100. Then, a user may browse the web page 100 conveniently and promptly.

The controller 15 may control the image processor 12 to analyze the input web page 100 and divide the web page 100 into the plurality of blocks 101 to 105. The method of dividing the web page 100 into the plurality of blocks 101 to 105 may vary. For example, the web page 100 may be divided by using a hierarchy structure of the web page 100 and by dividing the web page on an image basis.

In the "method of using the hierarchy structure of the web page 100", a document object model tree (hereinafter, the "DOM tree") of the web page 100 which is to be divided is obtained (process 1). Then, a block meeting the condition is extracted from the DOM tree (process 2). The condition may include the following:
the extracted block is not the same in size as the block added before (removal of duplication);
the block exists in a predetermined depth (a threshold value for speed up may be set, e.g., at an random value of 6 which is included in a range of 5 to 10);
a width and a height of an HTML tag is a predetermined size or larger (e.g. width of 120 and a height of 30 may be set in consideration of readability and the size of a screen);
only limited tags are permitted (e.g., DIV, UL, LI, DL, DD, P, TD, Table, IFRAME, TR, FORM, DT, OL, etc.);
a block a depth of which is 2 or more is not out of a parent node; and
a block a depth of which is 2 or more overlaps the parent node in one of top and bottom and left and right sides.

If a block which does not include other child blocks therein, among the blocks obtained through the process 1 and the process 2, is a predetermined size or larger, the concerned area only may be divided by the method of dividing the web page on an image basis (process 3). The process may be as follows:
compare a color of a previous coordinate y-1 and a color of a current coordinate y by transversely scanning vertical lines of an image and a difference of a color comparison of five or more becomes a basis for dividing a previous block and other blocks;
compare a color of a previous coordinate x-1 and a color of a current coordinate x by vertically scanning transverse lines of an image and a difference of a color comparison of five or more becomes a basis for dividing a previous block and other blocks;
if a color is consecutive predetermined times or more in the scanning operation in the above cases, it is determined to be a line;
the largest color comparison value is selected from the difference of values to R, G and B;
a recursive calculation is performed based on the result of the line scanning to the transverse and vertical points to divide blocks; and
the divided blocks are extracted from those not overlapping blocks extracted before.

If a tag area is not the same as the block size viewed by the human eye or if there is a white space between blocks and the divided areas are not good to view, the coordinates of the extracted blocks may be adjusted as follows (process 4):
if blocks are right next to each other and a distance between coordinates of the blocks is smaller than a particular threshold value, a child block of the compared block has the same value as that of the previous block (the threshold value may be set at 50 if x components are compared, and set at 30 if y components are compared); and
such coordinate comparison is performed to x and y coordinates of a left top of the block and x and y coordinates of a right bottom of the block and x is compared to x and y is compared to y, regardless of the location of the component.

If the web page is divided by the above method, any type of web page may be divided into blocks and browsed. Thus, readability of the web page information is maintained and a convenient and prompt browsing is available. As the web page can be divided into semantic blocks, the quantity of information of the web page provided to a user may be adjusted.

The block may vary in size depending on the web page 100. If the block is too large, e.g., if larger than a screen of the display unit 13, a user may find it hard to recognize the content of the block. Even if the ratio of the web page 100 is reduced to solve the foregoing problem, readability becomes worse. The block means a minimum unit of a block that cannot be divided anymore by the foregoing method.

If the block of the web page 100 is too large, the controller 15 of the display apparatus 1 according to the exemplary embodiment may redivide the block into a plurality of specific blocks for a user to recognize the content of the block.

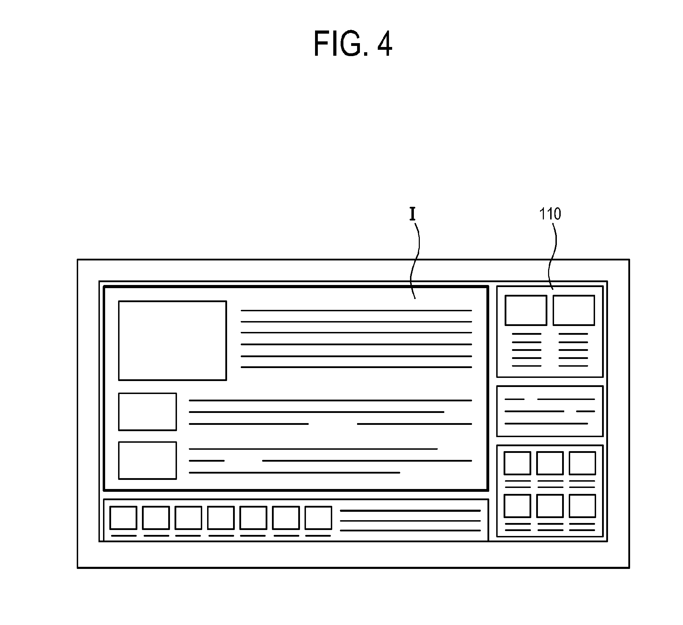

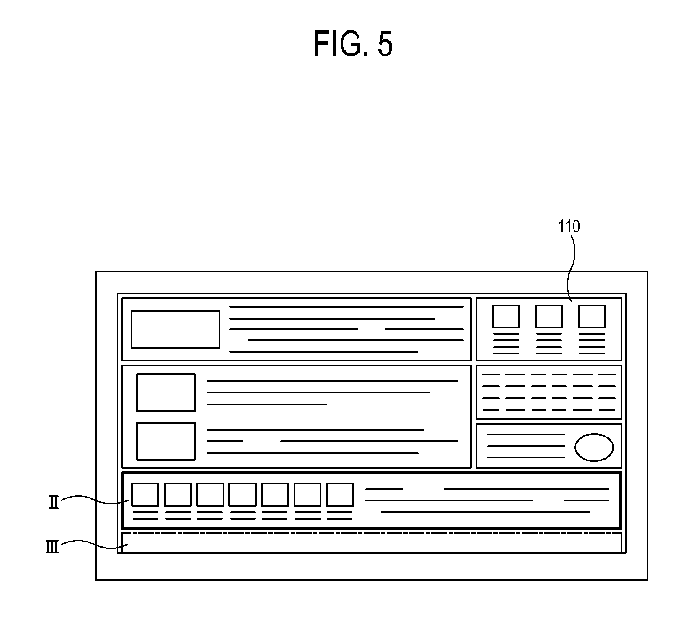

FIGS. 4 and 5 illustrate a web page which is displayed in the display apparatus according to the exemplary embodiment. FIG. 4 illustrates a focused block I that is displayed in a central area of the display unit 13. FIG. 5 illustrates a focused block II which is displayed in a lower fringe of the display unit 13. The image processor 12 processes the web page 100 to display on the display unit 13 entire blocks I and II selected or focused by a user when the web page 100 is displayed on the display unit 13. According to the present exemplary embodiment, the web page 100 is displayed in the divided blocks 101, which means the block 101 selected by a user is displayed in its entirety on the display unit 13 and is not hidden or does not disappear. Then a user may easily search and view the blocks 101. The image processor 12 may display on the display unit 13 a graphic user interface (GUI) to distinguish the focused blocks I and II from other blocks. The GUI may include a thick line or a highlighted box highlighting a frame of the blocks I and II or may include different colors, shades or degrees of clearness. The GUI enables a user to promptly and intuitively recognize the blocks I and II selected from the web page 100.

If the focused blocks I and II according to a user's command are larger than a predetermined reference size, e.g. if the focused blocks I and II are approximately 60% or more of the screen of the display unit 13, the image processor 12 may process the web page 100 to display the focused block I in a central area of the display unit 13 (refer to FIG. 4). Otherwise, the image processor 12 may enlarge and display the selected block I on the display unit 13.

As shown in FIG. 5, if the focused block II according to a user's command is smaller than a predetermined reference size or located in a fringe of the display unit 13, the image processor 12 according to the present exemplary embodiment displays a predetermined dummy UI III in at least a circumference of the focused block II. The dummy UI III indicates that another block 101 exists in addition to the block II located in the fringe. The dummy UI III may be a party of consecutive blocks 101 or include a bar, an arrow or a diagram in a predetermined color.

The image processor 12 may enlarge and display the focused block II in the central area of the display unit 13 upon selection of the focused block II by a user, regardless of the size of the focused block II.

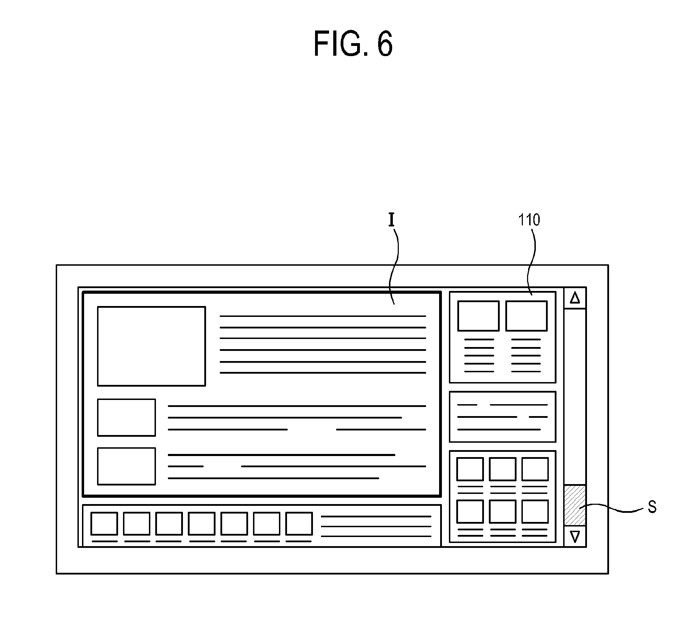

FIG. 6 illustrates a web page which is displayed when a scroll operation is performed in the display apparatus according to the exemplary embodiment. The command receiver 14 according to the present exemplary embodiment receives a scroll signal from a user to perform a scroll operation. A user may adjust a direction key or move his/her touch of a touch sensor to perform the scroll operation moving the web page 100. The display unit 13 displays a scroll bar S and a UI to indicate a direction in which the scroll bar S may move.

Upon receiving the scroll signal, the image processor 12 scrolls the web page 100 by block. If the web page 100 is scrolled by block, the web page 100 is scrolled according to the size of the blocks instead of a fixed moving distance, and the movement of the web page 100 becomes faster and the entire block is displayed on the display unit 13. Thus, the block is not cut or a content including the block is not cut. Also, the focused block according to a user's command may be displayed in an optimum location, and a user may quickly search the blocks.

After moving the blocks 101 according to a user's command, the image processor 12 processes the web page 100 to display the focused block I in the central area of the display unit 13 if the focused block I is larger than a predetermined size as in FIG. 6. As the block I which is larger than the reference size is displayed in the central area of the display unit 13, a user may view the entire block I.

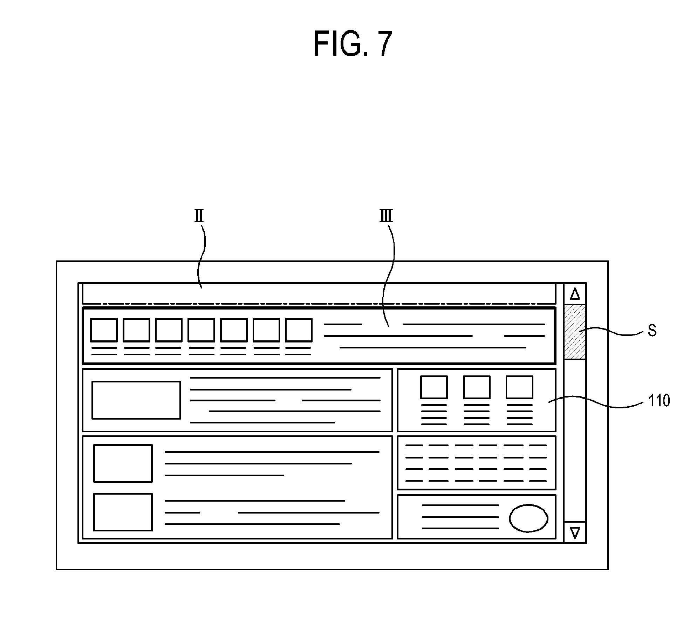

FIG. 7 illustrates another web page which is displayed when a scroll operation is performed in the display apparatus according to the present exemplary embodiment. As shown therein, a user may scroll from the bottom to the top of the display unit 13.

After moving the block 101 according to a scroll signal, the image processor 12 determines whether the focused block II is a predetermined size or larger, e.g., 60% or more. If the focused block II is less than the reference size after the scroll operation, the image processor 12 displays the entire block II in an upper fringe of the display unit 13, and displays the predetermined dummy UI III in at least one circumference of the focused block II.

The GUI such as a frame or a thick line highlighting the focused block II may be omitted according to a user's setting.

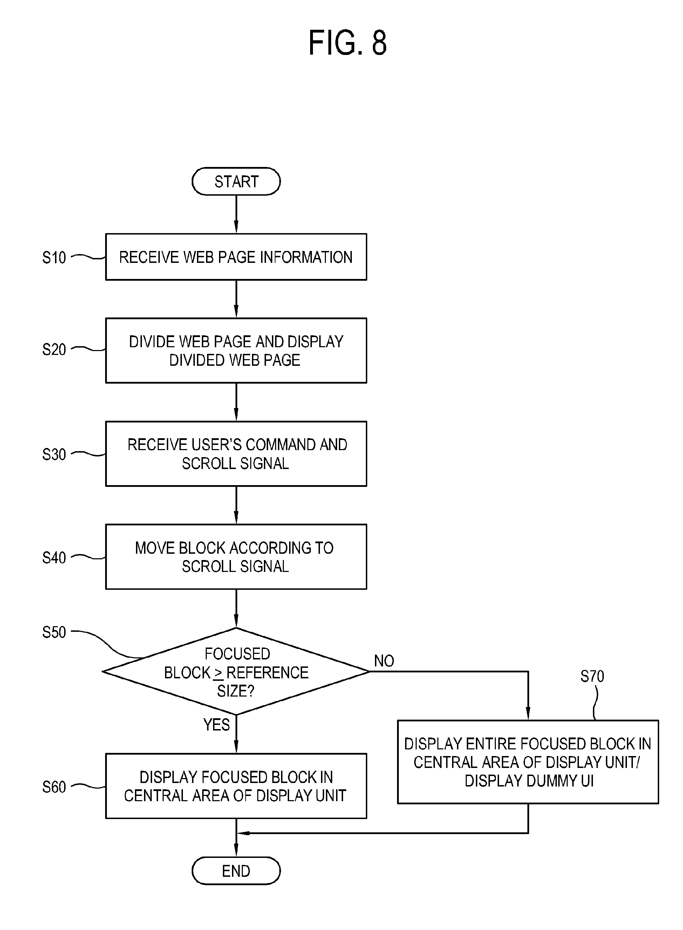

FIG. 8 is a control flowchart of a web page displaying method of the display apparatus according to the present exemplary embodiment. Referring to FIG. 8, the web page displaying method of the controller 15 will be described.

First, the web page information is received through the input unit 11 (S10).

The controller 15 controls the image processor 12 to divide the web page 100 into at least one block 101, and displays the web page 100 in the divided blocks 101 (S20).

Upon receiving a user's command, i.e., a scroll signal to scroll the web page 100 (S30), the controller 15 moves the blocks 101 according to the scroll signal (S40).

After the movement is completed, the controller 15 determines whether the focused blocks I and II are the predetermined reference size or larger (S50).

If it is determined that the focused blocks I and II are the predetermined reference size or larger, the image processor 12 displays the focused block I in the central area of the display unit 13 (S60).

If the focused blocks I and II are less than the predetermined reference size, the image processor 12 may display the focused block II in the fringe of the display unit 13 and displays the dummy UI III in at least one circumference of the focused block II (S70). When a user performs the scroll operation, the focus is usually given to the fringe of the display unit 13 in the direction of the scroll. Thus, the focused block II which is displayed in the fringe of the display unit 13 is provided as an example, but the display area of the focused block II is not limited thereto and may vary.

The dummy UI III may be displayed in a fringe of the block II corresponding to the direction in which the scroll is performed, or displayed in all circumferences of the block II. The dummy UI III may also be displayed in a fringe corresponding to the movable direction of the block II by the scroll operation.

If the blocks I and II are focused by a user's command such as the scroll operation, the image processor 12 may display the GUI to distinguish the focused blocks I and II from other blocks.

The present embodiments are characterized by browsing the web page 100 in blocks, displaying the web page in blocks on the display unit 13, and in particular scrolling the web page 100 in blocks according to the scroll signal.

As described above, a display apparatus and a web page displaying method of the same according to an exemplary embodiment easily searches a web page.

A display apparatus and a web page displaying method of the same according to another exemplary embodiment displays a web page in blocks which are not cut or hidden.

A display apparatus and a web page displaying method of the same according to another exemplary embodiment changes a display location of a block depending on a size of the block.

Although a few exemplary embodiments have been shown and described, it will be appreciated by those skilled in the art that changes may be made in these exemplary embodiments without departing from the principles of the invention, the range of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus comprising:
an input unit which receives web page information;
an image processor which processes a web page to display the web page;
a display unit which displays thereon the processed web page;
a command receiver which receives a user's command; and
a controller which controls the image processor to divide the web page into at least one block, and to display the web page in blocks on the display unit according to a user's command input through the command receiver.

2. The display apparatus according to claim 1, wherein the image processor processes the web page to display a focused block in a central area of the display unit.

3. The display apparatus according to claim 1, wherein the image processor processes the web page to display the entire focused block on the display unit.

4. The display apparatus according to claim 1, wherein the image processor processes the web page to move the blocks according to a scroll signal and to display the focused block in a central area of the display unit after the movement is completed upon when the scroll signal is received through the command receiver to scroll the web page.

5. The display apparatus according to claim 1, wherein the image processor processes the web page to move the blocks according to a scroll signal and to display the entire focused block on the display unit after the movement is completed when the scroll signal is received through the command receiver to scroll the web page.

6. The display apparatus according to claim 1, wherein the image processor processes the web page to display the focused block in a central area of the display unit if the focused block according to a user's command is a predetermined reference size or larger.

7. The display apparatus according to claim 1, wherein the image processor displays the focused block in a fringe of the display unit and displays a predetermined dummy UI in at least one circumference of the focused block.

8. The display apparatus according to claim 1, wherein the image processor displays a graphic user interface (GUI) to distinguish the focused block from other blocks.

9. A web page displaying method of a display apparatus which comprises a display unit, the method comprising:
receiving web page information;
dividing a web page into at least one block and displaying the divided block;
receiving a user's command; and
displaying the web page in blocks on the display unit according to the user's command.

10. The method according to claim 9, wherein the displaying the web page in blocks comprises displaying a focused block in a central area of the display unit.

11. The method according to claim 9, wherein the displaying the web page in blocks comprises displaying an entire focused block on the display unit.

12. The method according to claim 9, wherein the receiving the user's command comprises receiving a scroll signal to scroll the web page, and
the displaying the web page in blocks comprises moving the block according to the scroll signal and displaying a focused block in a central area of the display unit after the movement is completed.

13. The method according to claim 9, wherein the receiving the user's command comprises receiving a scroll signal to scroll the web page, and
the displaying the web page in blocks comprises moving the block according to the scroll signal and displaying an entire focused block on the display unit after the movement is completed.

14. The method according to claim 9, wherein the displaying the web page in blocks comprises determining whether a focused block according to the user's command is a predetermined reference size or larger, and displaying the focused block in a central area of the display unit if the focused block is the predetermined reference size or larger.

15. The method according to claim 9, wherein the displaying the web page in blocks comprises displaying a focused block in a fringe of the display unit; and
displaying a predetermined dummy user interface (UI) in at least one circumference of the focused block.
